# EUROPÄISCHE PATENTANMELDUNG

(11) **EP 3 627 681 A1**
(43) Veröffentlichungstag der Anmeldung: **25.03.2020**
(21) Anmeldenummer: 18000746.0
(22) Anmeldetag: 19.09.2018
(51) Int. Cl.: H02M 3/158, H02M 3/335, H02M 1/00

(54) **SCHALTNETZTEIL MIT EINER INDUKTIVITÄT UND MEHREREN REGELBAREN AUSGÄNGEN**

(71) Anmelder: Diehl AKO Stiftung & Co. KG, 88239 Wangen (DE)
(72) Erfinder: Niederle, Christian, 97618 Hohenroth (DE)
(74) Vertreter: Diehl Patentabteilung

(57) **Zusammenfassung**

Ein induktives Schaltnetzteil weist einen schaltenden, induktiven DC/DC-Konverter (10; 10'; 10") mit einem Eingang (11), über den eine Versorgungsspannung (VIN) zugeführt werden kann, und einem Ausgang (12) zum Bereitstellen einer Zwischenspannung (VM) sowie eine erste Ausgangsschaltung (14-1) mit einem Eingang (16-1), der mit dem Ausgang (12) des DC/DC-Konverters (10; 10'; 10") verbunden ist, und einem Ausgang (18-1) zum Bereitstellen einer Ausgangsspannung (V1) auf. Das erfindungsgemäße induktive Schaltnetzteil weist zudem wenigstens eine weitere Ausgangsschaltung (14-2 ... 14-n) auf, die einen mit dem Ausgang (12) des DC/DC-Konverters (10; 10'; 10") verbundenen Eingang (16-2 ... 16n) und einen Ausgang (18-2 ...18-n) zum Bereitstellen einer von der Ausgangsspannung (V1) der ersten Ausgangsschaltung (14-1) verschiedenen Ausgangsspannung (V2 ... Vn) aufweist.

## Beschreibung

Die vorliegende Erfindung betrifft ein induktives Schaltnetzteil zum Erzeugen mehrerer geregelter Ausgangsspannungen.

Das Prinzip eines induktiven Schaltnetzteils beruht darauf, eine Wicklung durch Anlegen einer Versorgungsspannung zu laden, die Versorgungsspannungszufuhr anschließend abzuschalten und den eingeprägten Strom dann der Ausgangsspannung zuzuführen. Herkömmliche induktive Schaltnetzteile liefern jeweils eine Ausgangsspannung je Wicklung. Die DE 102 18 456 A1 offenbart eine Schaltnetzteilanordnung mit mehreren Wicklungen, um mehrere unterschiedliche Ausgangsspannungen bereitzustellen.

Es ist die Aufgabe der Erfindung, ein verbessertes induktives Schaltnetzteil zu schaffen, mit dem mehrere unterschiedliche Ausgangsspannungen bereitgestellt werden können.

Diese Aufgabe wird gelöst durch ein induktives Schaltnetzteil mit den Merkmalen des Anspruchs 1. Besonders vorteilhafte Ausgestaltungen und Weiterbildungen der Erfindung sind Gegenstand der abhängigen Ansprüche.

Das induktive Schaltnetzteil der Erfindung hat einen schaltenden, induktiven DC/DC-Konverter mit einem Eingang, über den eine Versorgungsspannung zugeführt werden kann, und einem Ausgang zum Bereitstellen einer Zwischenspannung; eine erste Ausgangsschaltung mit einem mit dem Ausgang des DC/DC-Konverters verbundenen Eingang und einem Ausgang zum Bereitstellen einer Ausgangsspannung; und wenigstens eine weitere Ausgangsschaltung, die einen mit dem Ausgang des DC/DC-Konverters verbundenen Eingang und einen Ausgang zum Bereitstellen einer von der Ausgangsspannung der ersten Ausgangsschaltung verschiedenen Ausgangsspannung aufweist.

Durch das Anschließen mehrerer Ausgangsschaltungen an den Ausgang des DC/DC-Konverters können bei dem erfindungsgemäßen Schaltnetzteil mit nur einer Wicklung mehrere unterschiedliche, geregelte Ausgangsspannungen bereitgestellt werden. Durch den Verzicht auf zusätzliche Wicklungen bzw. Induktivitäten wird ein einfacher und kostengünstiger Aufbau des induktiven Schaltnetzteils ermöglicht.

Ein weiterer Vorteil des erfindungsgemäßen induktiven Schaltnetzteils besteht darin, dass die mehreren Ausgangsspannungen durch die individuellen Ausgangsschaltungen einzeln geregelt werden können. Außerdem entsteht durch die individuellen Ausgangsschaltungen eine größere Flexibilität, da durch Verändern einer oder mehrerer Ausgangsschaltungen und/oder durch Hinzufügen weiterer Ausgangsschaltungen die Spannungsniveaus und die Anzahl der vom Schaltnetzteil bereitgestellten Ausgangsspannungen auf einfache Weise geändert werden können, ohne den Konverter und/oder den Grundschaltungsaufbau des Schaltnetzteils modifizieren zu müssen. Auch muss durch die individuellen Ausgangsschaltungen nur eine geringere Variantenvielfalt an Schaltnetzteilen für verschiedene Anwendungen bereitgehalten werden.

Ein weiterer Vorteil des erfindungsgemäßen induktiven Schaltnetzteils besteht darin, dass mit nur einer vorhandenen Wicklung auch solche Ausgangsspannungen bereitgestellt werden können, dass auf einen nachgeschalteten Linearregler verzichtet werden kann oder die von einem nachgeschalteten Linearregler zu überbrückende Spannung reduziert werden kann. Als Folge davon können erforderliche Kühlungsmaßnahmen reduziert werden, wodurch die benötigte Kühlfläche verkleinert und Standbyverluste verringert werden können, was zu einem platzsparenden und kostengünstigen Aufbau des Schaltnetzteils führt. Außerdem hat der geringere Leistungsverbrauch im nachgeschalteten Linearregler einen geringeren Stromabfall zum Laden der Ausgangskapazitäten zur Folge, sodass sich dieser näher an der Abschaltschwelle bewegen kann und die verfügbare Ausgangsleistung leicht erhöht ist.

In einer Ausgestaltung der Erfindung weist die wenigstens eine weitere Ausgangsschaltung zwischen ihrem Eingang und ihrem Ausgang ein Schaltelement, vorzugsweise in Form eines Transistors, zum wahlweisen Zuschalten der weiteren Ausgangsschaltung auf. In diesem Fall weist die wenigstens eine weitere Ausgangsschaltung bevorzugt zudem einen Treiber, vorzugsweise in Form eines Gate-Treibers, zum Betätigen des Schaltelements auf. Optional kann die wenigstens eine weitere Ausgangsschaltung bei dieser Ausgestaltung zwischen ihrem Eingang und ihrem Schaltelement ferner eine Diode aufweisen, sodass beim Zuschalten mehrerer Ausgangsspannungen negative Spannungen an den Schaltelementen vermieden werden können.

In einer Ausgestaltung der Erfindung weist die erste Ausgangsschaltung zwischen ihrem Eingang und ihrem Ausgang eine Diode auf, um den Freilauf des Stroms zu gewährleisten. Alternativ oder zusätzlich kann die erste Ausgangsschaltung analog zu der wenigstens einen weiteren Ausgangsschaltung auch ein Schaltelement zum wahlweisen Zuschalten der ersten Ausgangsschaltung aufweisen.

Zum Bereitstellen der unterschiedlichen Ausgangsspannungen sind die Ausgangsschaltungen vorzugsweise jeweils mit einem Spannungsteiler ausgestattet. In einer Ausgestaltung der Erfindung weisen die erste Ausgangsschaltung und die wenigstens eine weitere Ausgangsschaltung jeweils einen Kondensator zum Einstellen des Spannungsniveaus der Ausgangsspannung auf, wobei die Kapazitäten der Kondensatoren der ersten und der wenigstens einen weiteren Ausgangsschaltung unterschiedlich zueinander sind.

Der schaltende, induktive DC/DC-Konverter des erfindungsgemäßen Schaltnetzteils ist auf keine spezielle Topologie beschränkt. Vorzugsweise wird ein DC/DC-Konverter in Tiefsetzsteller-Topologie, ein DC/DC-Konverter in Hochsetzsteller-Topologie oder ein DC/DC-Konverter in Flyback-Topologie verwendet.

In einer Ausgestaltung der Erfindung kann dem Ausgang der ersten Ausgangsschaltung und/oder der wenigstens einen weiteren Ausgangsschaltung ein Linearregler nachgeschaltet sein, mit dem die jeweilige Ausgangsspannung weiter abgesenkt werden kann.

In einer weiteren Ausgestaltung der Erfindung ist eine Steuerung zum Ansteuern des Schaltelements bzw. dessen Treibers vorgesehen, wobei die Steuerung ausgestaltet ist, um einen Schaltvorgang des Schaltelements im Bereich eines Stromnulldurchgangs zu bewirken. Auf diese Weise können Schaltverluste reduziert werden.

In einer noch weiteren Ausgestaltung der Erfindung ist eine Steuerung zum Ansteuern des Schaltelements bzw. dessen Treibers vorgesehen, wobei die Steuerung ausgestaltet ist, um eine Hysterese beim Wechsel zwischen den Ausgangsspannungen der ersten und der wenigstens einen weiteren Ausgangsschaltung zu bewirken. Auf diese Weise kann ein zu häufiges Schalten oder gar ein Linearbetrieb der Schaltelemente vermieden werden.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, größtenteils schematisch:
- Fig. 1: ein vereinfachtes Teilschaltbild eines induktiven Schaltnetzteils gemäß einem ersten Ausführungsbeispiel der vorliegenden Erfindung;
- Fig. 2: ein vereinfachtes Teilschaltbild eines induktiven Schaltnetzteils gemäß einem zweiten Ausführungsbeispiel der vorliegenden Erfindung; und
- Fig. 3: ein vereinfachtes Teilschaltbild eines induktiven Schaltnetzteils gemäß einem dritten Ausführungsbeispiel der vorliegenden Erfindung.

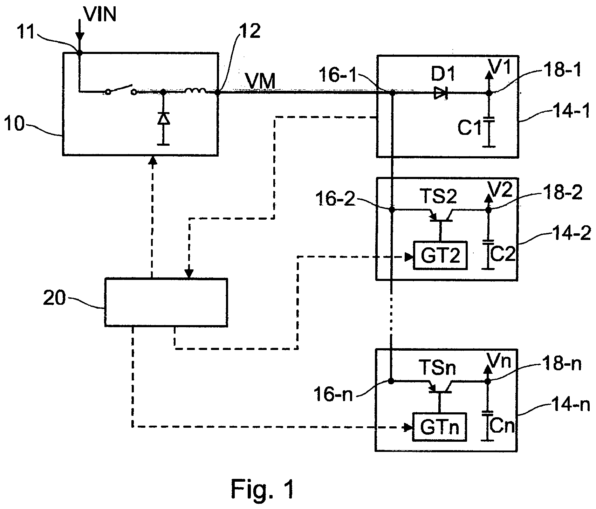

In Fig. 1 sind die erfindungsrelevanten Teile eines ersten Ausführungsbeispiels eines induktiven Schaltnetzteils veranschaulicht.

Das induktive Schaltnetzteil hat einen schaltenden, induktiven DC/DC-Konverter 10 in Tiefsetzsteller-Topologie. An einem Eingang 11 des DC/DC-Konverters 10 wird diesem eine Versorgungsspannung VIN zugeführt, bei der es sich beispielsweise um eine gleichgerichtete Netzspannung handelt. Der entsprechende AC/DC-Konverter des Schaltnetzteils ist in Fig. 1 nicht dargestellt. An seinem Ausgang 12 stellt der DC/DC-Konverter 10 eine Zwischenspannung VM bereit.

Das induktive Schaltnetzteil hat ferner eine erste Ausgangsschaltung 14-1, deren Eingang 16-1 mit dem Ausgang 12 des DC/DC-Konverters 10 verbunden ist und an deren Ausgang 18-1 eine Ausgangsspannung V1 bereitgestellt wird. Der Ausgang 18-1 ist lediglich über eine Diode D1 mit dem Eingang 16-1 verbunden, um den Freilauf des Stroms zu gewährleisten. Zum Einstellen der Ausgangsspannung V1 verfügt die erste Ausgangsschaltung 14-1 über einen Kondensator C1. Bei der Ausgangsspannung V1 der ersten Ausgangsschaltung 14-1 handelt es sich in diesem Ausführungsbeispiel um die Ausgangsspannung des Schaltnetzteils mit dem höchsten Spannungsniveau.

Wie in Fig. 1 dargestellt, weist das induktive Schaltnetzteil ferner eine oder mehrere weitere Ausgangsschaltungen 14-2 ... 14-n auf. Die Anzahl dieser weiteren Ausgangsschaltungen 14-2 ... 14-n ist grundsätzlich beliebig. Die Eingänge 16-2 ... 16-n der weiteren Ausgangsschaltungen 14-2 ... 14-n sind jeweils ebenfalls mit dem Ausgang 12 des DC/DC-Konverters 10 verbunden. An den Ausgängen 18-2 ... 18-n der weiteren Ausgangsschaltungen 14-2 ... 14-n wird jeweils eine Ausgangsspannung V2 ... Vn bereitgestellt, deren Spannungsniveau über einen Kondensator C2 ... Cn eingestellt wird. Da die Kapazitäten der Kondensatoren C1 ... Cn aller Ausgangsschaltungen 14-1 ... 14-n unterschiedlich zueinander sind, sind auch die Spannungsniveaus der Ausgangsspannungen V1 ... Vn der Ausgangsschaltungen 14-1 ... 14-n unterschiedlich zueinander.

In einer Ausführungsform beträgt das Spannungsniveau der Ausgangsspannung V1 der ersten Ausgangsschaltung 14-1 zum Beispiel +15 V und beträgt das Spannungsniveau der Ausgangsspannung V2 einer weiteren Ausgangsschaltung 14-2 zum Beispiel +5 V. Der weiteren Ausgangsschaltung 14-2 kann dann optional ein vorzugsweise nur einstufiger Linearregler nachgeschaltet sein, um das Spannungsniveau auf zum Beispiel +3,3 V abzusenken.

Die weiteren Ausgangsschaltungen 14-2 ... 14-n haben ferner jeweils ein Schaltelement TS2 ... TSn in Form eines Transistors zwischen ihrem Eingang 16-2 ... 16-n und ihrem Ausgang 18-2 ... 18-n. Die Schaltelemente TS2 ... TSn werden jeweils von einem Treiber GT2 ... GTn in Form eines Gate-Treibers betätigt.

Wie in Fig. 1 dargestellt, verfügt das Schaltnetzteil ferner über eine Steuerung 20. Diese Steuerung 20 steuert den DC/DC-Konverter 10, insbesondere dessen Schaltelement an, um die Zwischenspannung VM zu regeln. Außerdem steuert die Steuerung 20 die Treiber GT2 ... GTn der weiteren Ausgangsschaltungen 14-2 ... 14-n an, um deren Schaltelemente TS2 ... TSn zu betätigen.

Optional kann der Steuerung 20 zudem ein Feedback über die Ausgangsspannung V1 der ersten Ausgangsschaltung 14-1 gegeben werden, um die Zwischenspannung VM zu regeln. Alternativ oder zusätzlich kann der Steuerung 20 auch ein Feedback über die Ausgangsspannung V2 ... Vn einer oder mehrerer weiterer Ausgangsschaltungen 14-2 ... 14-n gegeben werden. Im Fall mehrerer Feedbacks können diese zum Beispiel aus den Niveaus der mehreren Ausgangsspannungen analog kombiniert werden oder als ODER-Verbindung der Ergebnisse der Spannungsschwellenprüfungen digital kombiniert werden.

Sind alle Schaltelemente TS2 ... TSn der weiteren Ausgangsschaltungen 14-2 ... 14-n ausgeschaltet bzw. offen, so fließt der Strom von der Wicklung des DC/DC-Konverters 10 über die Diode D1 zum Ausgang 18-1 der ersten Ausgangsschaltung 14-1. Wird eines der Schaltelemente TS2 ... TSn der weiteren Ausgangsschaltungen 14-2 ... 14-n eingeschaltet bzw. geschlossen, dann fließt der Strom von der Wicklung des DC/DC-Konverters 10 über dieses eingeschaltete Schaltelement zum Ausgang 18-2 ... 18-n bzw. zum Kondensator C2 ... Cn der jeweiligen weiteren Ausgangsschaltung 14-2 ... 14-n. D.h. der im induktiven DC/DC-Konverter 10 eingeprägte Strom kann so wahlweise unterschiedlichen Ausgangsspannungen V1 ... Vn zugeführt werden, sodass aus nur einer Wicklung im DC/DC-Konverter 10 auf einfache und kostengünstige Weise mehrere geregelte Ausgangsspannungen erzeugt werden können. Bei einer entsprechenden Ansteuerung der Schaltelemente TS2 ... TSn können auf diese Weise grundsätzlich beliebig viele Ausgangsspannungen V2 ... Vn geladen werden.

Um negative Spannungen an den Schaltelementen TS2 ... TSn der weiteren Ausgangsschaltungen 14-2 ... 14-n beim Zuschalten mehrerer Ausgangsspannungen V2 ... Vn zu vermeiden, können diese optional zusätzlich über eine Diode (nicht dargestellt) mit dem Eingang 16-2 ... 16-n der weiteren Ausgangsschaltung 14-2 ... 14-n verbunden werden.

Die Ausgangsspannungen V2 ... Vn der weiteren Ausgangsschaltungen 14-2 ... 14-n werden üblicherweise auf deren Spannungsniveaus geregelt. Um Schaltverluste zu reduzieren, ist es von Vorteil, die Schaltelemente TS2 ... TSn so anzusteuern, dass sie in den Stromnulldurchgängen ein- oder ausgeschaltet werden. Um ein zu häufiges Schalten oder gar einen Linearbetrieb der Schaltelemente TS2 ... TSn zu vermeiden, kann eine Hysterese in der Spannungsregelung zweckmäßig sein. Über eine solche Hysterese lässt sich auch der Kompromiss aus Regelgenauigkeit und Schaltverlusten einstellen.

Regelt die Steuerung 20 das Schaltnetzteil ausschließlich auf das maximale Ausgangsspannungsniveau V1 der ersten Ausgangsschaltung 14-1, dann kann es zweckmäßig sein, die Trennung des Ausgangs 18-1 vom DC/DC-Konverter 10 über die Diode D1 durch einen parallel geschalteten Widerstand (nicht dargestellt) zumindest teilweise aufzuheben. Der zusätzliche Widerstand agiert so als eine Grundlast, welche die maximale Ausschaltdauer des Schaltnetzteils begrenzt und eine nachzuladende kleinere Ausgangsspannung V2 ... Vn bereits etwas versorgt.

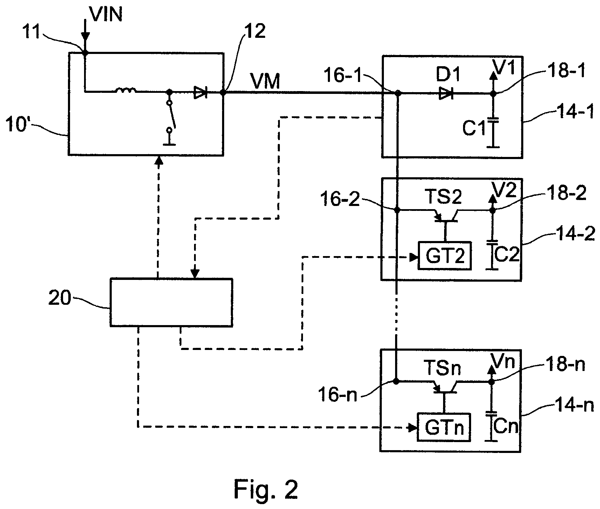

Fig. 2 zeigt die erfindungsrelevanten Teile eines zweiten Ausführungsbeispiels eines induktiven Schaltnetzteils.

Das Schaltnetzteil von Fig. 2 unterscheidet sich von jenem des ersten Ausführungsbeispiels darin, dass der schaltende, induktive DC/DC-Konverter 10' in einer Hochsetzsteller-Topologie ausgestaltet ist. Im Übrigen entsprechen das Schaltnetzteil von Fig. 2 und seine Funktionsweise jenen des ersten Ausführungsbeispiels von Fig. 1.

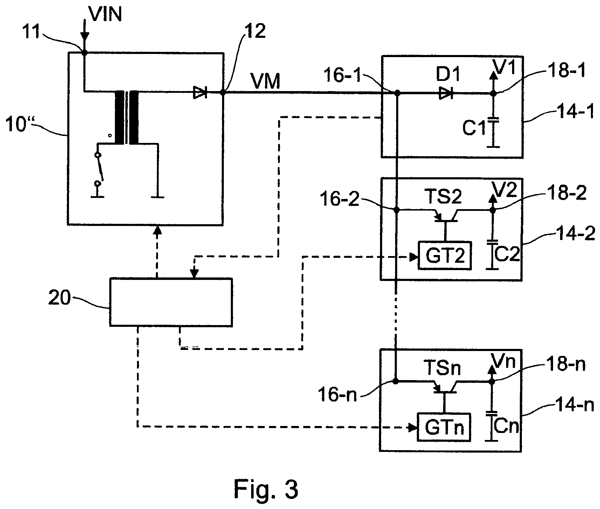

Fig. 3 zeigt die erfindungsrelevanten Teile eines dritten Ausführungsbeispiels eines induktiven Schaltnetzteils.

Das Schaltnetzteil von Fig. 3 unterscheidet sich von jenem des ersten Ausführungsbeispiels darin, dass der schaltende, induktive DC/DC-Konverter 10" in einer Flyback-Topologie ausgestaltet ist. Im Übrigen entsprechen das Schaltnetzteil von Fig. 3 und seine Funktionsweise ebenfalls jenen des ersten Ausführungsbeispiels von Fig. 1.

Die Aufbauten und Funktionsweisen der verschiedenen Topologien des DC/DC-Konverters 10, 10', 10" sind dem Fachmann hinlänglich bekannt, weshalb auf eine nähere Erläuterung verzichtet werden kann.

### BEZUGSZIFFERNLISTE

- 10: DC/DC-Konverter (Tiefsetzsteller-Topologie)
- 10': DC/DC-Konverter (Hochsetzsteller-Topologie)
- 10": DC/DC-Konverter (Flyback-Topologie)
- 11: Eingang von 10, 10', 10"
- 12: Ausgang von 10, 10', 10"
- 14-1: erste Ausgangsschaltung
- 14-2: zweite Ausgangsschaltung
- 14-n: n-te Ausgangsschaltung
- 16-1: Eingang von 14-1
- 16-2: Eingang von 14-2
- 16-n: Eingang von 14-n
- 18-1: Ausgang von 14-1
- 18-2: Ausgang von 14-2
- 18-n: Ausgang von 14-n
- 20: Steuerung

- C1: Kondensator von 14-1
- C2: Kondensator von 14-2
- Cn: Kondensator von 14-n
- D1: Diode von 14-1
- GT2: Treiber, insbes. Gate-Treiber für TS2
- GTn: Treiber, insbes. Gate-Treiber für TSn
- TS2: Schaltelement, insbes. Transistor von 14-2
- TSn: Schaltelement, insbes. Transistor von 14-n
- VIN: Versorgungsspannung
- VM: Zwischenspannung
- V1: Ausgangsspannung von 14-1
- V2: Ausgangsspannung von 14-2
- Vn: Ausgangsspannung von 14-n

## Patentansprüche

1. Induktives Schaltnetzteil, aufweisend:
einen schaltenden, induktiven DC/DC-Konverter (10; 10'; 10") mit einem Eingang (11), über den eine Versorgungsspannung (VIN) zugeführt werden kann, und einem Ausgang (12) zum Bereitstellen einer Zwischenspannung (VM); und
eine erste Ausgangsschaltung (14-1) mit einem Eingang (16-1), der mit dem Ausgang (12) des DC/DC-Konverters (10; 10'; 10") verbunden ist, und einem Ausgang (18-1) zum Bereitstellen einer Ausgangsspannung (V1),
**dadurch gekennzeichnet, dass**
wenigstens eine weitere Ausgangsschaltung (14-2 ... 14-n) vorgesehen ist, die einen mit dem Ausgang (12) des DC/DC-Konverters (10; 10'; 10") verbundenen Eingang (16-2 ... 16n) und einen Ausgang (18-2 ...18-n) zum Bereitstellen einer von der Ausgangsspannung (V1) der ersten Ausgangsschaltung (14-1) verschiedenen Ausgangsspannung (V2 ... Vn) aufweist.

2. Induktives Schaltnetzteil nach Anspruch 1, bei welchem
die wenigstens eine weitere Ausgangsschaltung (14-2 ... 14-n) zwischen ihrem Eingang (16-2 ... 16-n) und ihrem Ausgang (18-2 ... 18-n) ein Schaltelement (TS2 ... TSn) zum wahlweisen Zuschalten der weiteren Ausgangsschaltung (14-2 ... 14-n) aufweist.

3. Induktives Schaltnetzteil nach Anspruch 2, bei welchem
die wenigstens eine weitere Ausgangsschaltung (14-2 ... 14-n) einen Treiber (GT2 ... GTn) zum Betätigen des Schaltelements (TS2 ... TSn) aufweist.

4. Induktives Schaltnetzteil nach Anspruch 2 oder 3, bei welchem
die wenigstens eine weitere Ausgangsschaltung (14-2 ... 14-n) zwischen ihrem Eingang (16-2 ... 16-n) und ihrem Schaltelement (TS2 ... TSn) eine Diode aufweist.

5. Induktives Schaltnetzteil nach einem der vorherigen Ansprüche, bei welchem die erste Ausgangsschaltung (14-1) zwischen ihrem Eingang (16-1) und ihrem Ausgang (18-1) eine Diode (D1) und/oder ein Schaltelement zum wahlweisen Zuschalten der ersten Ausgangsschaltung (14-1) aufweist.

6. Induktives Schaltnetzteil nach einem der vorherigen Ansprüche, bei welchem die erste Ausgangsschaltung (14-1) und die wenigstens eine weitere Ausgangsschaltung (14-2 ... 14-n) jeweils einen Kondensator (C1, C2 ... Cn) zum Einstellen des Spannungsniveaus der Ausgangsspannung (V1, V2 ... Vn) aufweisen, wobei die Kapazitäten der Kondensatoren (C1, C2 ... Cn) der ersten und der wenigstens einen weiteren Ausgangsschaltung (14-1, 14-2 ... 14-n) unterschiedlich zueinander sind.

7. Induktives Schaltnetzteil nach einem der vorherigen Ansprüche, bei welchem der schaltende, induktive DC/DC-Konverter (10; 10'; 10") ein DC/DC-Konverter (10) in Tiefsetzsteller-Topologie, ein DC/DC-Konverter (10') in Hochsetzsteller-Topologie oder ein DC/DC-Konverter (10") in Flyback-Topologie ist.

8. Induktives Schaltnetzteil nach einem der vorherigen Ansprüche, bei welchem dem Ausgang (18-1, 18-2 ... 18n) der ersten Ausgangsschaltung (14-1) und/oder der wenigstens einen weiteren Ausgangsschaltung (14-2 ... 14-n) ein Linearregler nachgeschaltet ist.

9. Induktives Schaltnetzteil nach einem der Ansprüche 2 bis 8, bei welchem eine Steuerung (20) zum Ansteuern des Schaltelements (TS2 ... TSn) oder dessen Treibers (GT2 ... GTn) vorgesehen ist, wobei die Steuerung (20) ausgestaltet ist, um einen Schaltvorgang des Schaltelements (TS2 ... TSn) im Bereich eines Stromnulldurchgangs zu bewirken.

10. Induktives Schaltnetzteil nach einem der Ansprüche 2 bis 9, bei welchem eine Steuerung (20) zum Ansteuern des Schaltelements (TS2 ... TSn) oder dessen Treibers (GT2 ... GTn) vorgesehen ist, wobei die Steuerung (20) ausgestaltet ist, um eine Hysterese beim Wechsel zwischen den Ausgangsspannungen (V1, V2 ... Vn) der ersten und der wenigstens einen weiteren Ausgangsschaltung (14-1, 14-2 ... 14-n) zu bewirken.
